# EUROPEAN PATENT APPLICATION

(11) **EP 0 523 247 A1**
(43) Date of publication of application: **20.01.1993**
(21) Application number: 92904246.3
(22) Date of filing: 29.01.1992
(51) Int. Cl.: G05B 19/18, G05B 19/04

(54) **CONTROL DEVICE**

(30) Priority: 05.02.1991 JP 35561/91
(71) Applicant: FANUC LTD., Minamitsuru-gun, Yamanashi 401-05 (JP)
(72) Inventor: WATANABE, Atsushi Fanuc Mansion Harimomi 7-207, Minamitsuru-gun Yamanashi 401-05 (JP); TERAWAKI, Fumikazu Fanuc Mansion Harimomi 8-106, Minamitsuru-gun2Yamanashi 401-05 (JP)
(74) Representative: Brunner, Michael John
(86) International application number: JP9200090
(87) International publication number: WO9214198

(57) **Abstract**

The start time from the switch-on of a power supply to the time where the control device becomes operable is reduced to a great extent. A robot control equipment (1) includes a processor board (control section) (10), which includes a processor (11) and a RAM (12). The processor (11) and RAM (12) are connected to a bus (10a). The RAM (12) is a nonvolatile storage, in which a system program, an operational program and many kinds of data, etc., are stored.

## Description

### Technical Field

This invention relates to a control device which includes a control unit having a processor as a central component, and more particularly, to a control device for a robot, an NC machine tool or the like.

### Background Art

Generally, a control unit (arithmetic unit) of a control device has a processor as a central component, and a ROM and a RAM are usually used as the memories of the control unit. The ROM is a nonvolatile memory and stores a control program, and the RAM is used for arithmetic operations and stores various data. The RAM comprises a volatile memory, and therefore, when the power supply to the control device is cut off, the content of the RAM is lost.

Accordingly, when the control device is supplied with power and started, the content of the RAM must be initialized. Namely, the control program stored in the ROM, and a motion program for an object to be controlled (e.g., a robot or NC machine tool) stored in an external memory, must be transferred to the RAM. Further, the content of the memory must be partially rewritten to provide predetermined values for initialization.

Some RAMs have an area formed by a nonvolatile memory backed up by a battery, and the motion program is stored in the nonvolatile memory area. In this case, the initialization for the motion program is unnecessary, but the initialization for the control program, etc., is still required.

The initialization takes time (e.g., 10 to 20 seconds), and much time is needed before the control device is ready for operation after the start.

Furthermore, if the user desires to retrieve a state assumed immediately before the stoppage of power, much time is required to resume such a state because it is lost when the power supply is cut off.

### Disclosure of the Invention

This invention was created in view of the above circumstances, and an object thereof is to provide a control device in which a startup time that must elapse before the control device becomes ready for operation after the power supply is started can be greatly reduced.

To achieve the above object, this invention provides a control device including a control unit having a processor as a central component, wherein the entire memory of the control unit is a nonvolatile memory.

The entire memory of the control unit including a processor as a central component is formed by a nonvolatile memory, and therefore, the content of the memory is not lost even when the power supply is cut off. Accordingly, the startup time from the start of the power supply until the device becomes ready for operation is greatly shortened.

### Brief Description of the Drawings

FIG. 1 is a schematic diagram of a robot control device according to one embodiment of this invention; and
FIG. 2 is a diagram showing the structure of a RAM.

### Best Mode of Carrying Out the Invention

An embodiment of this invention will be described with reference to the drawings.

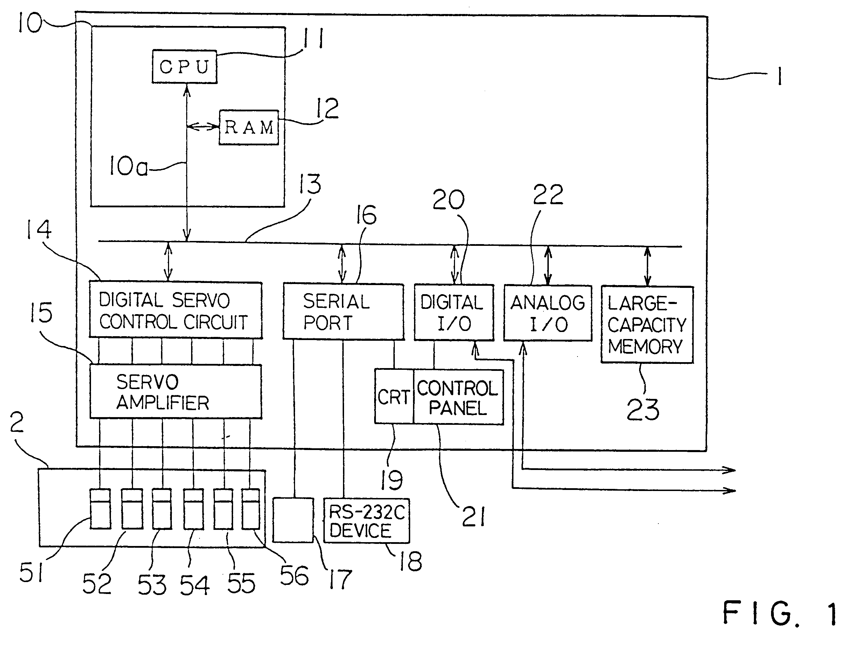

FIG. 1 is a schematic diagram of a robot control device according to one embodiment of this invention. A robot control device 1 comprises a processor board (control unit) 10 including a processor 11 and a RAM 12. The processor 11 is connected to the RAM 12 via a bus 10a. The RAM 12 comprises a nonvolatile memory and stores a system program, a motion program, various data and the like, as described in detail later.

The processor board 10 is connected to a bus 13, and a digital servo control circuit 14 connected to the bus 13 drives servomotors 51, 52, 53, 54, 55 and 56 through a servo amplifier 15 in accordance with commands from the processor board 10. These servomotors are built in a robot 2 and actuate individual axes thereof.

A serial port 16 is connected to the bus 13, and further, is connected to a teaching control panel 17 equipped with a built-in display, and an RS-232C device 18. The teaching control panel 17 having a built-in display is used to enter operating conditions for the robot 2, etc. The serial port 16 is also connected to a CRT 19, and a digital I/O 20 is connected to a control panel 21; data input and output with respect to peripheral devices is carried out through the digital I/O 20 and an analog I/O 22. A large-capacity memory 23 stores teaching data and the like.

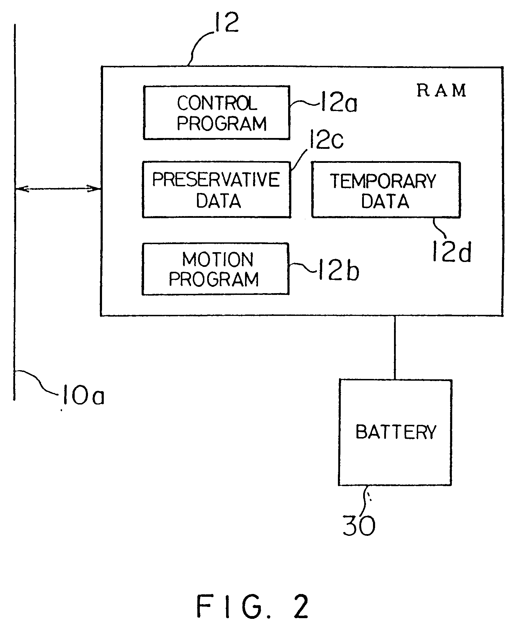

FIG. 2 is a diagram showing the structure of the RAM. The RAM 12 comprises a CMOS RAM backed up by a battery 30, and thus functions as a nonvolatile memory. The RAM 12 stores a control program 12a, a motion program 12b, preservative data 12c such as parameters, and temporary data 12d such as that produced during arithmetic operations.

Since the RAM 12 is a nonvolatile memory, the contents thereof are not lost even when the power supply to the robot control device 1 is cut off. Accordingly, when power is next supplied, an initialization required in a conventional system becomes unnecessary, and thus the robot control device 1 can be quickly started. Namely, the startup time can be greatly reduced.

Further, the control program 12a, which is conventionally stored in a ROM, can be stored directly in the RAM 12, and therefore, it is not necessary to provide a ROM, and thus the single RAM 12 suffices for the memory. Accordingly, the arrangement of the processor board 10 can be simplified.

Furthermore, if the user desires to retrieve a state assumed immediately before the stoppage of power, such a state can be easily resumed after the power supply is started.

In this embodiment, control data used when the power supply is started, e.g., control data for starting the servomotors, must be written in the RAM 12 when the power supply is cut off. Accordingly, some time must be provided for effecting memory access when the power supply is cut off, but such a time is very short.

Although in the above embodiment this invention is applied to a robot control device, it can be modified to be applied to other control devices, such as a numerical control device.

As described above, according to this invention, the entire memory is formed by a nonvolatile memory, and therefore, the contents thereof are not lost even when the power supply to the control device is cut off. Accordingly, when the power supply is next initiated, the initialization, conventionally indispensable, becomes unnecessary and the control device can be quickly started. Namely, the startup time can be greatly shortened.

## Claims

1. A control device including a control unit having a processor as a central component, wherein an entire memory of the control unit is composed of a nonvolatile memory.

2. The control device according to claim 1, wherein the entire memory of the control unit is composed of a single nonvolatile RAM.

3. The control device according to claim 2, wherein the nonvolatile RAM comprises a CMOS RAM backed up by a battery.
